# EUROPEAN PATENT APPLICATION

(11) **EP 1 901 219 A1**
(43) Date of publication of application: **19.03.2008**
(21) Application number: 07114940.5
(22) Date of filing: 24.08.2007
(51) Int. Cl.: G06Q 10/00

(54) **Workflow management system**

(30) Priority: 08.09.2006 JP 2006244840
(71) Applicant: Ricoh Company, Ltd., Tokyo 143-8555 (JP)
(72) Inventor: Maeda, Kaoru, Ichikawa-shi, Chiba (JP); Rostanin, Oleg c/o DFKI, 67633, Kaiserslautern (DE); Holz, Harald c/oDFKI, 67633, Kaiserslautern (DE); Suzuki,Takeshi, Yokohama-shi, Kanagawa (JP)
(74) Representative: Schwabe - Sandmair - Marx

(57) **Abstract**

A disclosed workflow management system is capable of dynamically constructing a model while executing a workflow. The workflow management system includes a task page management unit that manages a task page corresponding to a task or a task model of a workflow independently from a workflow engine; an attachment folder management unit that manages an attachment folder of the task page independently from the workflow engine; a registering unit that generates index information of an attached document of the task of the workflow and the task page and registers the index information into a search database; and a presenting unit that, when displaying the task page, presents related information through a search in the attachment folder and in the search database.

## Description

### BACKGROUND OF THE INVENTION

### 1. Field of the Invention

The present invention relates generally to workflow management systems.

### 2. Description of the Related Art

Conventional workflow management systems need to determine a workflow model before executing the workflow. However, in fields such as research and development or in some service businesses, prior information is often incomplete. Therefore, it is difficult to formulate a workflow model in advance. Accordingly, a method called a constructive workflow has been developed, where a model can be dynamically constructed during execution of a workflow (see, for example, Japanese Patent Application No. 2005-47792 and Japanese Patent Application No. 2005-154261).

This constructive workflow technology allows reusing and freely combining past tasks and thereby creating a more flexible workflow. However, operations such as research and development or certain service businesses are not standardized, and therefor a lot of time is consumed viewing related documents and creating and editing various documents for proceeding with the tasks.

As one way of viewing related documents, the inventors of the present invention have already proposed a method of automatically presenting information related to a task instance (see, for example, Japanese Patent Application No. 2006-3500).

Although this method of automatically presenting information related to a task instance is very useful, the following problems have been noted:
(1) Sharing task related information among users and among tasks relies on searches including automatic presentation, making it difficult to take advantage of positive repository structuring by multiple users;
(2) Because creation and editing of documents are not positively supported by a workflow management system, operations for associating documents with tasks need to be consciously performed and are therefore troublesome. Especially, associating an in-process document with the original task is not easy, making document management cumbersome;
(3) With regard to execution of a task, in addition to a demand for managing input/output documents as explicitly attached documents (related documents), there have been demands for recording how a task has been executed and for managing documents at the level of individual "project", which is a higher level than the individual task level; however, functions that satisfy theses demands do not exist.
(4) During implementation of a task, users seem to spend more time viewing and editing an in-process document and less time working on the task detailed information screen, so it is preferable to automatically present information related to the in-process document while viewing and editing the in-process document.

### SUMMARY OF THE INVENTION

In view of the foregoing, the present invention aims to provide a workflow management system that can manage task related information as a document based on a CMS (Content Management System) such as Wiki and, by taking advantage of flexibility and co-editing due to the CMS, facilitate sharing of the task related information among users and among tasks in construction and automatic presentation of the related information; and can add information items to an in-process document of such as Wiki, and automatically present related information during document viewing/editing.

According to an aspect of the present invention, there is provided a workflow management system capable of dynamically constructing a model while executing a workflow. The workflow management system includes a task page management unit that manages a task page corresponding to a task or a task model of a workflow independently from a workflow engine; an attachment folder management unit that manages an attachment folder of the task page independently from the workflow engine; a registering unit that generates index information of an attached document of the task of the workflow and the task page and registers the index information into a search database; and a presenting unit that, when displaying the task page, presents related information through a search in the attachment folder and in the search database.

According to another aspect of the present invention, there is provided an information presenting method executable by a workflow management system capable of dynamically constructing a model while executing a workflow. The method includes a step of managing a task page corresponding to a task or a task model of a workflow independently from a workflow engine; a step of managing an attachment folder of the task page independently from the workflow engine; a step of generating index information of an attached document of the task of the workflow and the task page and registering the index information into a search database; and a step of, when displaying the task page, presenting related information through a search in the attachment folder and in the search database.

In one embodiment of the present invention, a workflow management system can manage task related information as a document based on a CMS such as Wiki and, by taking advantage of flexibility and co-editing due to the CMS, facilitate sharing of the task related information among users and among tasks in construction and automatic presentation of the related information. Further, the workflow management system can add information items to an in-process document of such as Wiki, and automatically present related information during document viewing/editing.

### BRIEF DESCRIPTION OF THE DRAWINGS

FIG. 1 is a block diagram showing a workflow management system according to an embodiment of the present invention;
FIG. 2 is a diagram showing an example of a relationship between managed objects;
FIG. 3 is a diagram showing an example of an attachment folder;
FIG. 4 is a sequence diagram illustrating an example of a process of displaying related information;
FIG. 5 is a flowchart illustrating an example of a process of searching for related information;
FIG. 6 is a flowchart illustrating an example of a process of searching an attachment folder;
FIG. 7 is an example of a screen for presenting information;
FIG. 8 is an example of a screen displaying attachment folders;
FIG. 9 is an example of a screen displaying a category tree;
FIG. 10 is an example of a screen displaying suggested categorization; and
FIG. 11 is a sequence diagram illustrating an example of processing performed in response to clicking a Categorize button:

### DETAILED DESCRIPTION OF THE PREFERRED EMBODIMENT

Preferred embodiments of the present invention are described below with reference to the accompanying drawings.

### <System Configuration>

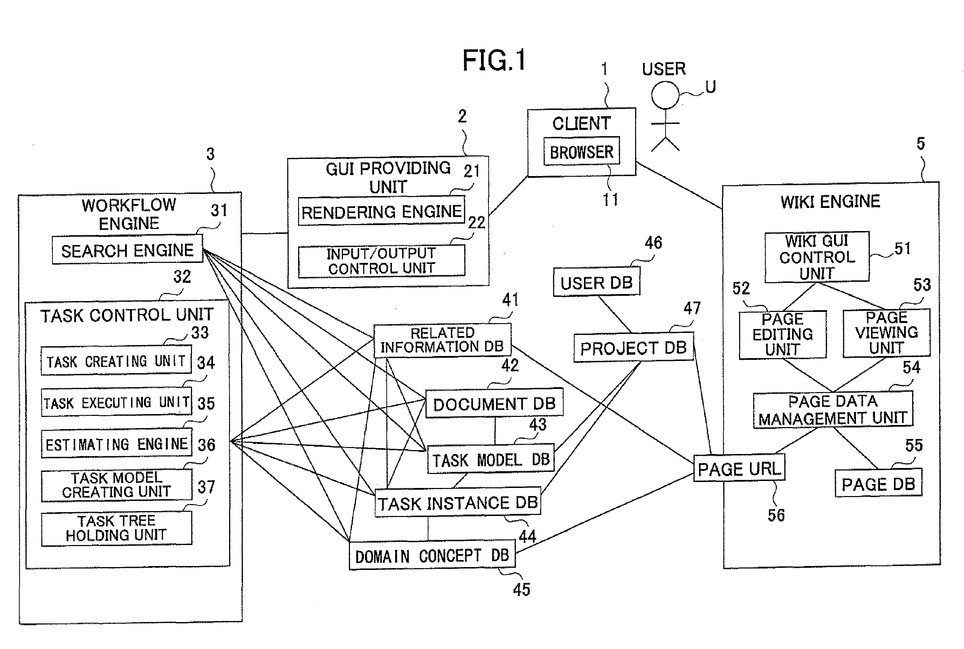

FIG. 1 is a block diagram showing a workflow management system according to an embodiment of the present invention.

In FIG. 1, the workflow management system includes a GUI providing unit 2 that provides a GUI (Graphical User Interface) in response to an access from a browser 11 of a client 1 such as a PC (Personal Computer) operated by a user U using the system, a workflow engine 3 that dynamically generates and executes a workflow model by reusing existing task models and/or task instances, various DBs (Databases) 41 - 47, and a Wiki engine 5 that manages creation, editing, and reading of documents related to a task.

The related information DB 41 holds related information (attached documents) referred to when executing a workflow. The document DB 42 holds document bodies. The task model DB 43 holds task models (process types) previously abstracted by an administrator. The task instance DB 44 holds past task instances. The domain concept DB 45 holds matching categories including related task instances and related information previously grouped together by an administrator. The user DB 46 holds user information. The project DB 47 manages a project (theme) of a workflow.

The GUI providing unit 2 includes a rendering engine 21 for rendering a display screen, and an input/output control unit 22 for exchanging information with the user U.

The workflow engine 3 includes a search engine 31 for executing various searches in the DBs 41 - 45, and a task control unit 32 for controlling tasks of a workflow.

The task control unit 32 includes a task creating unit 33 for creating a task, a task executing unit 34 for executing a created task, an estimating engine 35 for estimating the present task of the user U and searching for related information in the DBs 41 - 45, a task model creating unit 36 for creating a task model, and a task tree holding unit 37 for holding a task tree (a hierarchical relationship between tasks).

The Wiki engine 5 includes a Wiki GUI control unit 51 for performing GUI control including switching between a display mode and an editing mode, a page editing unit 52 for controlling editing of a Wiki page, a page viewing unit 53 for controlling viewing of a Wiki page, a page data management unit 54 for managing Wiki page data, a page DB 55 for holding Wiki page data, and a page URL (Uniform Resource Locator) 56 as a link to a Wiki page. Although not shown, the Wiki engine 5 further includes a markup renderer having an automatic link generation function, and a function module group (plug-in) including such as a comment writing function and an update reporting function. The Wiki engine 5 can store a Wiki page together with a revision history using an existing external version management system (history management storage).

Wiki is a type of CMS that is editable online by any user (http://ja.wikipedia.org/wiki/Wiki, http://c2.com/cgi/wiki). In Wiki, contents are managed at the level of a so-called "page", and text formatting can be done with a simple "Wiki markup" without using HTML. Words written in "CamelCase" (words such as "CamelCase" that are joined without spaces where the first letter of each word is capitalized and followed by lower-case letters) are automatically transformed into reference links between pages. The Wiki is capable of managing editing history on a per-page basis and is operable using only a Web browser.

Incorporating the Wiki engine 5 into the workflow management system provides the content is recorded on a per-page basis. Automatic update reporting is also done on a per-page basis.

A "top page" is a cover page/portal of a set of Wiki pages, and usually has a page name such as "Top" and "WebHome".

A "task Wiki page" is a Wiki page created one for each task instance, and can easily be created, edited, and viewed in order to facilitate use as a space for recording or discussing information about execution of tasks.

An "attachment folder" includes hierarchical folders and information in the folders such as files, Web links, and notes as information related to tasks, process types, and Wiki pages.

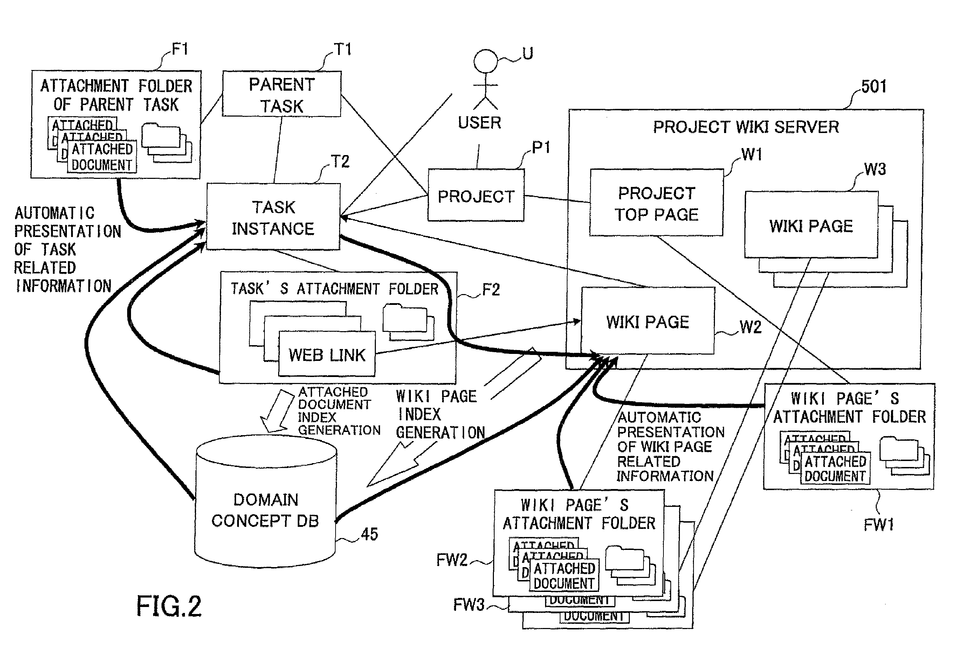

FIG. 2 shows an example of a relationship between managed objects. A parent task T1 and a task instance T2 of a project P1 are provided with attachment folders F1 and F2, respectively. A project Wiki server 501 is provided one for each project P1, and stores a project top page W1 for the project P1, a task Wiki page W2 for a task instance T2, and Wiki pages W3. A user of the task instance T2 can following advantages:
(1) An in-process document can be managed together with a modification history;
(2) Related information can be stored/referred to independently from a task lifetime;
(3) It is possible to provide a space for discussing how to proceed with a task;
(4) Flexibility due to access rights control independent from a task can be obtained; and
(5) Mutual linking between a project portal and shared documents is facilitated.

### <Operation>

First, explanations of important terms are given below.

A "task (task instance)" is a unit of work as a component of workflow, and has subdivided work as a child task. The task represents a structure of a workflow based on a parent-child relationship.

A "project" defines a context in which a workflow is executed. A Wiki server is assigned independently to each project.

A "Wiki page" is a unit of information managed by the Wiki and is accessible by a URL unique to each page. Revision history of the move directly from a task details screen to an editing screen/a viewing screen of the corresponding task Wiki page 2 and to the project top page W1.

An index of the documents in the attachment folders F1 and F2, the project top page W1 the task Wiki page W2, and the Wiki pages W3 is generated in the domain concept DB 45, allowing automatic presentation of task related information including the information in the attachment folders F1 and F2 to a user of the task instance T2.

On the other hand, the project top page W1, the task Wiki page W2, and the Wiki pages W3 in the project Wiki server 501 are provided with attachment folders FW1, FW2, and FW3, respectively. Wiki page related information (information about the task instance T2, results of search by the domain concept DB 45, and information in the attachment folders FW1 - FW3, etc.) is automatically presented to a user viewing/editing the task Wiki page W2.

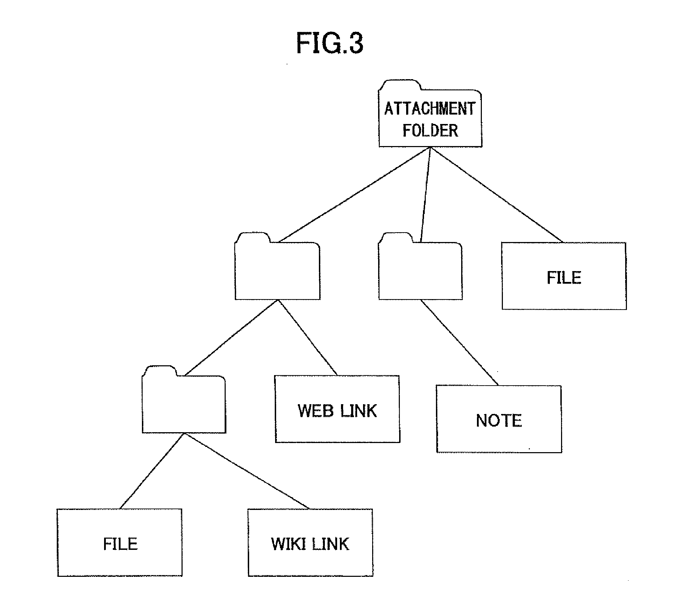

FIG. 3 shows an example of the attachment folders FW1 - FW3. An attachment folder as a container for holding information related to a task and a task model (process type) is created in the related information DB 41 (FIG. 1). In the attachment folder, lower folders or attached documents can be created. The types of attached documents include uploaded files, text notes, Web links, Wiki page links, etc.

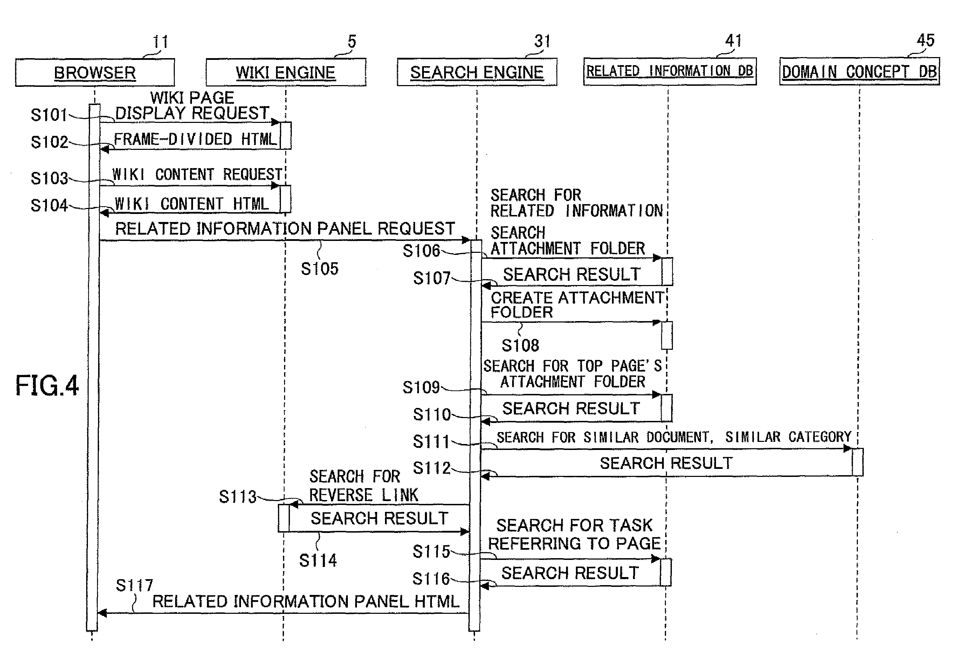

FIG. 4 is a sequence diagram illustrating an example of a process of displaying related information. According to an embodiment of the present invention, when creating, editing, and viewing information related to a task or a project-shared document on the Wiki, the following related information can be automatically presented:
(1) information explicitly attached to a Wiki page (attached document);
(2) information attached to a top page (shown as an inheritance document);
(3) a task/process type associated with a Wiki page; and
(4) similar documents, similar categories, (a page being viewed can be added thereto).

The attachment folder of the Wiki top page is utilized as a shared document repository of the entire project, while the top page of the project is utilized as a portal of the domain concept DB 45.

In FIG. 4, the browser 11 issues a Wiki page display request to the Wiki engine 5 (step S101), and the Wiki engine 5 returns HTML data divided into frames (step S102).

Then, the browser 11 issues a Wiki content request for Wiki content within the HTML data (step S103), and the Wiki engine 5 returns HTML data of Wiki content (step S104).

Then, the browser 11 issues a related information panel request to the search engine 31 (step S105). The search engine 31 sequentially executes, as part of a related information search, a search for an attachment folder for the Wiki page in the related information DB 41 (steps S106, S107), the creation of an attachment folder in the related information DB 41 (step S108) if the attachment folder for the Wiki page does not exist, a search for an attachment folder for the top page in the related information DB 41 (steps S109, S110), a search for a similar document and a similar category in the domain concept DB 45 (steps S111, S112), a reverse link search by the Wiki engine 5 (steps S113, S114), and a search for a task referring to the page in the related information DB (steps S115 and S116); and then the search engine 31 returns HTML data of the related information panel (step S117).

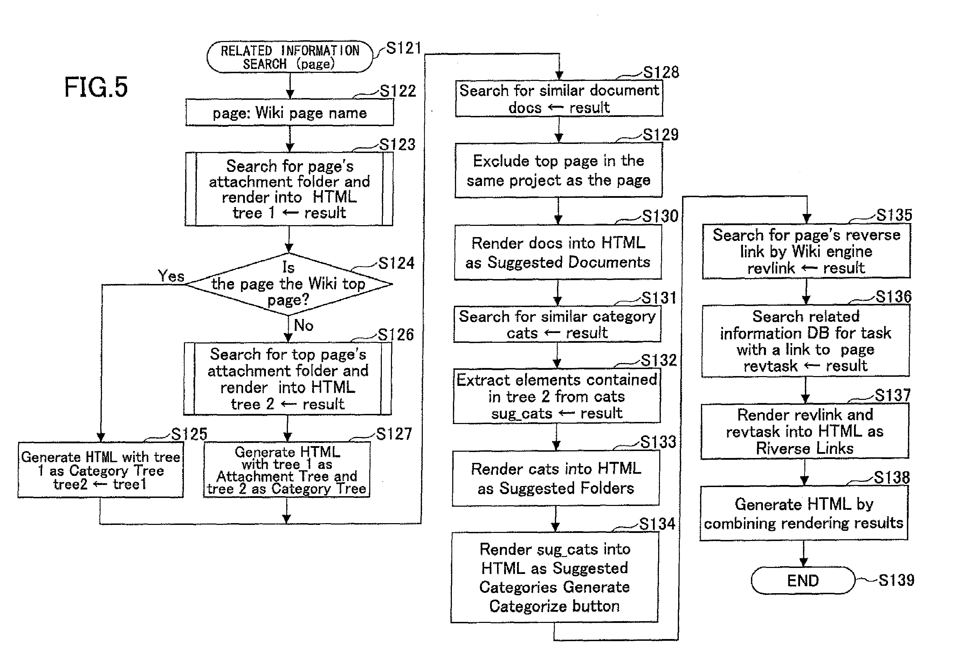

FIG. 5 is a flowchart illustrating an example of a process of searching for related information including the process (steps S106 - S116) shown in FIG. 4.

In FIG. 5, the process starts when a parameter page is specified (step S121). The parameter page is designated as a Wiki page name (step S122). An attachment folder for a Wiki page corresponding to the parameter page is searched for and rendered into HTML, and the result is assigned to a parameter tree 1 (step S123).

Next, it is determined whether the Wiki page corresponding to the parameter page is the top page (step S124). If the Wiki page is the top page (Yes in step S124), HTML is generated with the parameter tree 1 as a "Category Tree", and the parameter tree 1 is assigned to a parameter tree 2 (step S125).

If the Wiki page corresponding to the parameter page is not the top page (No in step S124), an attachment folder for the top page is searched for and rendered into HTML; and the result is assigned to the parameter tree 2 (step S126).

Then, HTML is generated for each of the parameter tree 1 as the "Attachment Tree" and the parameter tree 2 as the "Category Tree" (step S127).

After the generation of HTML for the trees, similar documents are searched for, and the result is assigned to a parameter docs (step S128). The top page in the same project as the Wiki page corresponding to the parameter page is excluded from the parameter docs (step S129), and the parameter docs is rendered into HTML as "Suggested Documents" (step S130).

Then, similar categories are searched for, and the result is assigned to a parameter cats (step S131). Elements contained in the parameter tree 2 are extracted from the elements of the parameter cats, and the result is assigned to a parameter sug_cats (step S132).

The similar document search (step S128) and the similar category search (step S131) are executed in the domain concept DB 45, and therefore it is possible to search based on the similarity level between documents if the document corresponding to the Wiki page is in the domain concept DB 45.

Then, the parameter cats is rendered into HTML as "Suggested Folders" (step S133). The parameter sug_cats is rendered into HTML as "Suggested Categories", and a Categorize button is generated (step S134).

Then, the Wiki engine 5 searches for a reverse link of the Wiki page corresponding to the parameter page, and the result is assigned to a parameter revlink (step S135).

Then, a task with a link to the Wiki page is searched for in the related information DB 41, and the result is assigned to a parameter revtask (step S136).

The parameters revlink, revtask are rendered into HTML as "Reverse Links" (step S137).

The rendering results are combined to generate HTML (step S138), thus ending the process (step S139).

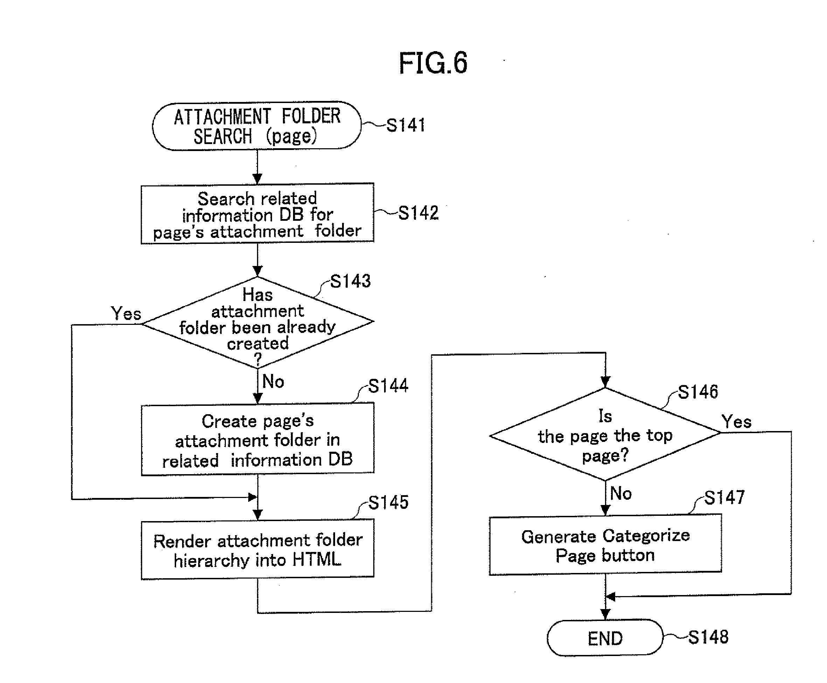

FIG. 6 is a flowchart illustrating an example of a process of the attachment folder search (steps S123, S126) shown in FIG. 5.

In FIG. 6, when the process starts by specifying the parameter page (step S141), an attachment folder for a Wiki page corresponding to the parameter page is searched for in the related information DB 41 (step S142).

Then, it is determined whether the attachment folder has been already created (step S143). If the attachment folder has not yet been created (No in step S143), an attachment folder for a Wiki page corresponding to the parameter page is created in the related information DB 41 (step S144). If the attachment folder has already been created (Yes in step S143), creation of an attachment folder is not performed.

The attachment folder hierarchy is rendered into HTML (step S145).

Then, it is determined whether the Wiki page corresponding to the parameter page is the top page (step S146). If the Wiki page corresponding to the parameter page is not the top page (No in step S146), a Categorize Page button is generated (step S147), thus ending the process (step S148). If the Wiki page corresponding to the parameter page is the top page (Yes in step S146), creation of a Categorize Page button is not performed.

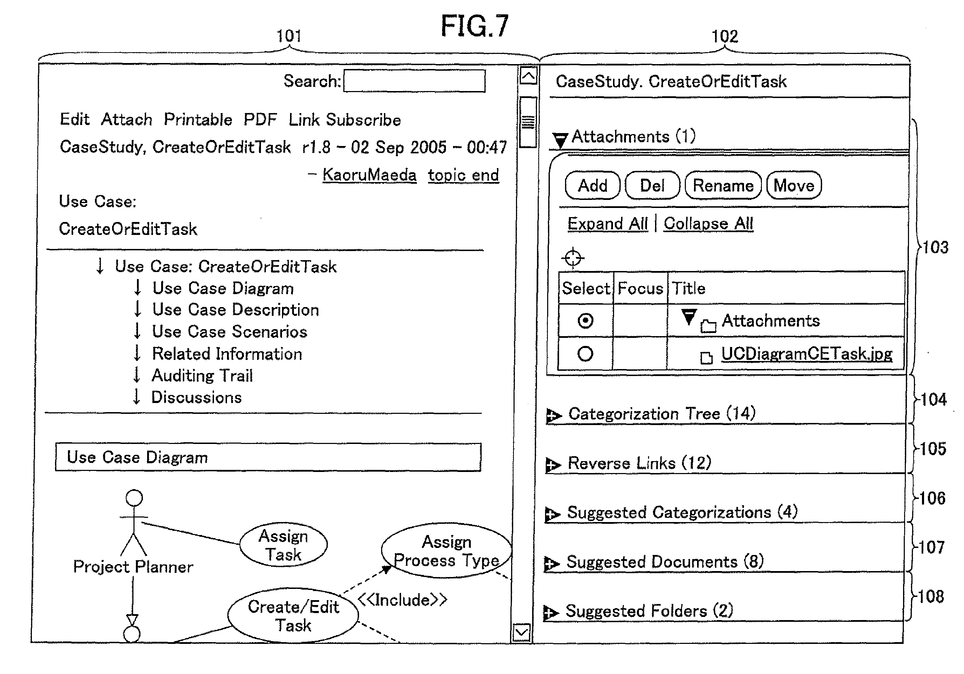

FIG. 7 is an example of a screen for presenting information, wherein a related information presentation panel 102 is displayed in the right half of the screen while viewing a Wiki page 101.

The related information includes an attachment folder 103 of the Wiki page, a category tree 104 (an attachment folder of the Wiki top page, located in the same position on the screen because it corresponds to inheritance from the parent task in terms of task), Wiki reverse links 105 as reverse references to the Wiki page (other Wiki pages and tasks referring to the present page), suggested categorization 106, similar documents 107, and similar categories 108.

If the Wiki page is the top page (serving as a portal and containing an overview of the project and a list of recently updated Wiki pages), its attachment folder is usually utilized as a document repository for the entire project. The attachment folder of the project top page is presented on the Wiki page related information screen and the task related information screen. Folders in the attachment folder are utilized as categorization in the domain concept DB 45. Also, a link to a Wiki document is created in any of the folders, thereby categorizing the Wiki document.

In the screen for presenting information for the top page, the following measures (exceptional processing for the top page) are taken:
(1) only a category tree is displayed so as to prevent the same content being redundantly displayed as an attachment folder; and
(2) "suggested categorization" is not displayed because there is no need to "categorize" the top page.

The top page itself is not suggested as a "similar document" for Wiki pages within the same project (because the top page is reachable at any time by a navigation function of Wiki).

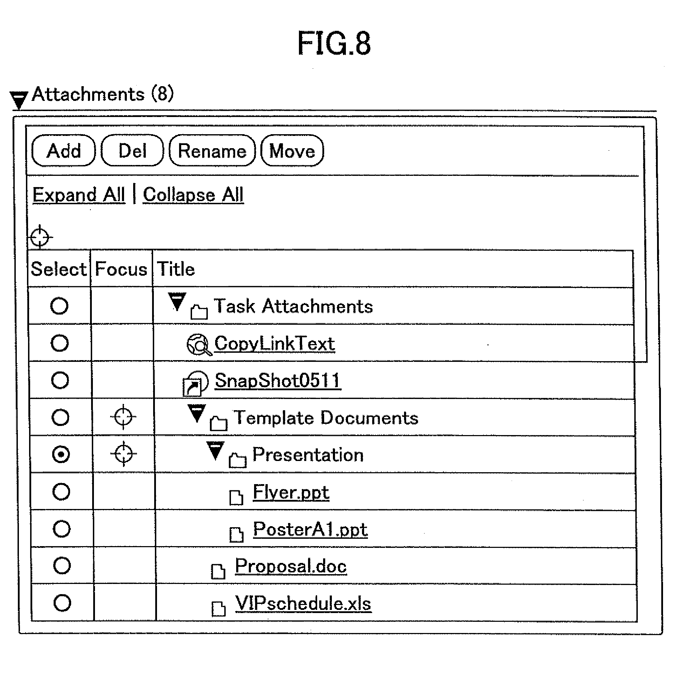

FIG. 8 is an example of a screen displaying an attachment folder, wherein attached documents are hierarchically displayed as links.

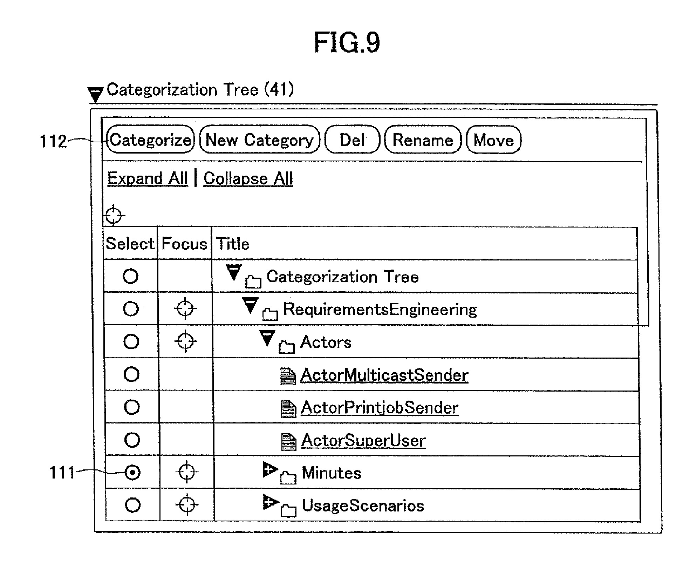

FIG. 9 is an example of a screen displaying a category tree, wherein the attachment folder of the Wiki top page is displayed as a category tree. By checkmarking a Select button 111 and clicking a Categorize button 112, the presently displayed page is added to the selected category and the categorized Wiki page is displayed as a link in the hierarchy.

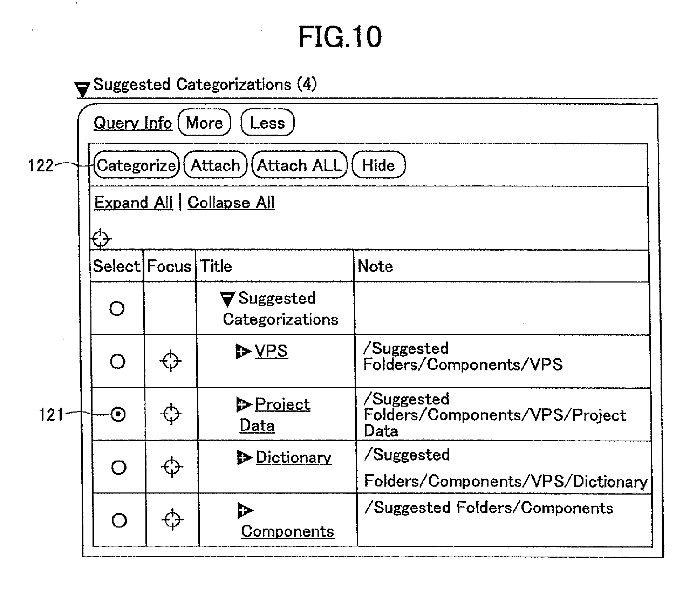

FIG. 10 is an example of a screen displaying suggested categorization wherein, among those obtained as a result of similar category search, categories contained in the category tree are displayed as suggested categories. Among those obtained as a result of similar category search, categories within the same project as the present page (i.e. folders attached to the top page) are suggested categories. Displaying separately from a general categorization within the domain concept DB 45 helps information construction within the project.

By checkmarking a Select button 121 and clicking a Categorize button 122, the presently displayed page is added to the selected category.

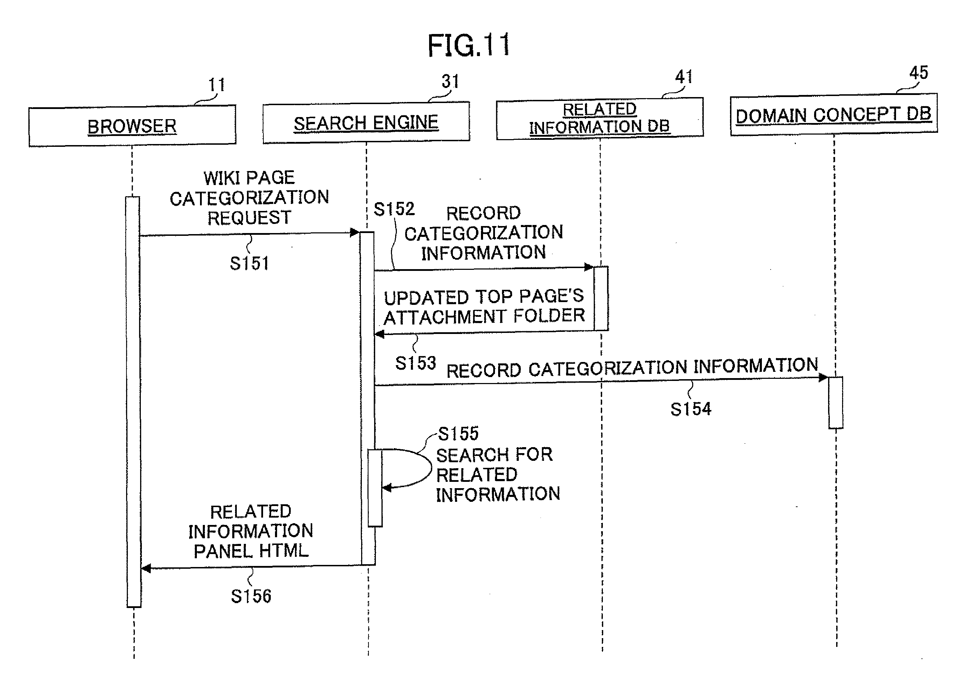

FIG. 11 is a sequence diagram illustrating an example of processing performed in response to clicking the Categorize button.

In FIG. 11, when the browser 11 issues a Wiki page categorization request to the search engine 31 by clicking the Categorize button (step S151), the search engine 31 records categorization information into the related information DB 41 (step S152). The related information DB 41 returns the content of the updated attachment folder of the top page (step S153). The search engine 31 records categorization information into the domain concept DB 45 (step S154).

Then, the search engine 31 searches for related information (step S155), and returns HTML data of the related information panel to the browser 11 (step S156).

### <Summary>

The workflow management system of an embodiment of the present invention can manage task related information as a document based on a CMS such as Wiki and, by taking advantage of flexibility and co-editing due to the CMS, facilitate sharing the task related information among users and among tasks in construction and automatic presentation of the related information. Further, the workflow management system can add information items to an in-process document of such as Wiki, and automatically present related information during document viewing/editing.

In the above, the present invention is described in terms of preferred embodiments of the present invention. Although the present invention is described above with reference to specific embodiments, it will be apparent that changes and modifications can be made without departing from the spirit and scope of the present invention as set forth in the appended claims. The present invention is not limited to the description of the specific embodiments and the attached drawings.

## Claims

1. A workflow management system capable of dynamically constructing a model while executing a workflow, **characterized by**:
a task page management unit that manages a task page corresponding to a task or a task model of a workflow independently from a workflow engine;
an attachment folder management unit that manages an attachment folder of the task page independently from the workflow engine;
a registering unit that generates index information of an attached document of the task of the workflow and the task page and registers the index information into a search database; and
a presenting unit that, when displaying the task page, presents related information through a search in the attachment folder and in the search database.

2. The workflow management system as claimed in claim 1, **characterized in that** the related information includes information explicitly attached to the task page, information attached to a top page, an associated task/process type, a similar document, and a similar category.

3. The workflow management system as claimed in claim 2, further **characterized by**:
a categorizing unit that categorizes a presently displayed document into one selected from one or more of the presented similar categories.

4. The workflow management system as claimed in claim 1, further **characterized by**:
a displaying unit that displays information attached to a top page as a category tree; and
a categorizing unit that categorizes a presently displayed document into a selected category in the displayed category tree.

5. The workflow management system as claimed in claim 1, **characterized in that** the attachment folder has a hierarchical structure and is capable of holding an arbitrary document including a link document.

6. The workflow management system as claimed in claim 1, **characterized in that** the task page is managed as a page on a Wiki.

7. The workflow management system as claimed in claim 1, further **characterized by**:
a project top page management unit that manages a project top page corresponding to a project of the workflow independently from the workflow engine;
wherein an attachment folder of the project top page is managed independently from the workflow engine; and
index information of the attached document of the task of the workflow and the project top page is generated and registered into the search database.

8. The workflow management system as claimed in claim 7, **characterized in that** the project top page is managed as a top page on a Wiki.

9. The workflow management system as claimed in claim 1, further **characterized by**:
a non-corresponding page management unit that manages a page that does not directly correspond to the task or a project of the workflow independently from the workflow engine;
wherein an attachment folder of the non-corresponding page is managed independently from the workflow engine; and
index information of the attached document of the task of the workflow and the non-corresponding page is generated and registered into the search database.

10. An information presenting method executable by a workflow management system capable of dynamically constructing a model while executing a workflow, the method **characterized by**:
a step of managing a task page corresponding to a task or a task model of a workflow independently from a workflow engine;
a step of managing an attachment folder of the task page independently from the workflow engine;
a step of generating index information of an attached document of the task of the workflow and the task page and registering the index information into a search database; and
a step of, when displaying the task page, presenting related information through a search in the attachment folder and in the search database.

11. The information presenting method as claimed in claim 10, **characterized in that** the related information includes information explicitly attached to the task page, information attached to a top page, an associated task/process type, a similar document, and a similar category.

12. The information presenting method as claimed in claim 11, further **characterized by**:
a step of categorizing a presently displayed document into one selected from one or more of the presented similar categories.

13. The information presenting method as claimed in claim 10, further **characterized by**:
a step of displaying information attached to a top page as a category tree; and
a step of categorizing a presently displayed document into a selected category in the displayed category tree.

14. The information presenting method as claimed in claim 10, **characterized in that** the attachment folder has a hierarchical structure and is capable of holding an arbitrary document including a link document.

15. The information presenting method as claimed in claim 10, further **characterized by**:
a step of managing a project top page corresponding to a project of the workflow independently from the workflow engine;
wherein an attachment folder of the project top page is managed independently from the workflow engine; and
index information of the attached document of the task of the workflow and the project top page is generated and registered into the search database.

16. The information presenting method as claimed in claim 10, further **characterized by**:
a step of managing a page that does not directly correspond to the task or a project of the workflow independently from the workflow engine;
wherein an attachment folder of the non-corresponding page is managed independently from the workflow engine; and
index information of the attached document of the task of the workflow and the non-corresponding page is generated and registered into the search database.
